# EUROPÄISCHE PATENTSCHRIFT

(11) **EP 4 445 053 B1**
(45) Veröffentlichungstag und Bekanntmachung des Hinweises auf die Patenterteilung: **20.08.2025**
(21) Anmeldenummer: 23704881.4
(22) Anmeldetag: 06.01.2023
(51) Int. Cl.: F16J 15/34, F04D 29/00, B33Y 10/00, B33Y 80/00

(54) **GLEITRING**
SLIDING RING
BAGUE DE FROTTEMENT

(30) Priorität: 07.02.2022 EP 22155333
(43) Veröffentlichungstag der Anmeldung: 16.10.2024
(73) Patentinhaber: Siemens Energy Global GmbH & Co. KG, 81739 München (DE)
(72) Erfinder: JAHRMARCHT, Steffen, 47166 Duisburg (DE)
(86) Internationale Anmeldenummer: PCT/EP2023/050238
(87) Internationale Veröffentlichungsnummer: WO 2023/147956

(56) Entgegenhaltungen:
- GB-A- 1 388 682
- US-A1- 2014 205 781

## Beschreibung

Die Erfindung betrifft einen Gleitring mit einer Innenoberfläche, die im Betrieb einer Welle gegenüberliegend angeordnet ist, wobei die Innenoberfläche mit einer Beschichtung ausgebildet ist.

Des Weiteren betrifft die Erfindung ein Verfahren zur Herstellung eines Gleitringes mit einer Innenoberfläche, die im Betrieb einer Welle gegenüberliegend angeordnet ist.

Gasdichtungen sind für Strömungsmaschinen, insbesondere Verdichter, die als Turbomaschinen ausgebildet sind, bei höheren Drücken in Folge der vergleichsweise geringen Leckage die bevorzugte Dichtungsform. Beispielsweise im Vergleich zur herkömmlichen Labyrinthdichtung ermöglicht die um eine Größenordnung niedrigere Leckage der Trockengasdichtung einen signifikanten Wirkungsgradzuwachs der entsprechenden Turbomaschine.

Gegenüber den verhältnismäßig einfach aufgebauten Labyrinthdichtungen sind die modernen Trockengasdichtungen vergleichsweise anspruchsvoll hinsichtlich der Betriebsbedingungen. Ein sicherer Betrieb erfordert ein entsprechend aufbereitetes und gereinigtes Sperrgas. Weiterhin sind Trockengasdichtungen für einen sicheren Betrieb auf eine bestimmte Mindestdrehzahl angewiesen.

Bei den eingangs genannten Gasdichtungen stehen sich in der Regel ein rotierender Dichtring und ein stehender Dichtring an einer sich radial erstreckenden Dichtebene mit jeweils einer Dichtfläche an den Dichtringen gegenüber. Damit das Dichtprinzip erfolgreich umgesetzt werden kann, ist es erforderlich, dass die Dichtflächen der beiden Dichtringe präzise gearbeitet und zueinander ausgerichtet sind, so dass unter reproduzierbaren Betriebsbedingungen ein Gleitfilm des Dichtgases sich zwischen den Dichtflächen aufbaut und dementsprechend die Dichtungen berührungslos arbeiten können. Die hohen Präzisionsanforderungen unter sämtlichen denkbaren Betriebsbedingungen werden in der Regel nur mit einer besonderen Werkstoffauswahl erreicht. Der rotierende und der stehende Dichtring sind deswegen regelmäßig nicht einstückig mit dem Rotor bzw. Stator verbunden, wobei regelmäßig auch der stehende Dichtring elastisch gegen den rotierenden Dichtring verspannt ist. Der rotierende Dichtring ist an dem Rotor festgelegt, damit es nicht zu unkontrollierten Relativbewegungen insbesondere in axialer Richtung kommt. Bei herkömmlichen Dichtungsanordnungen kommt es häufig zu einem Fretting an der Axialanlage zwischen dem rotierenden Dichtring und einem entsprechenden Axialanlageabsatz des Rotors, da herkömmliche Anordnungen eine axiale Relativbewegung ermöglichen.

Die am häufigsten verbreiteten Dichtungstypen bei druckbelasteten Wellenabdichtungen sind Gleitringdichtungen. Sie sind in der Lage, Wärmedehnungen und Verschleiß selbstständig auszugleichen und haben dadurch, im Vergleich zur früher verwendeten Stopfbuchspackung, einen geringeren Wartungsaufwand. Des Weiteren haben sie eine wesentlich geringere Reibung und Leckage als die zuvor verwendeten Stopfbuchspackungen. Die Einsatzbereiche von Gleitringdichtungen reichen unter anderem von Pumpen bis Zentrifugen und Verdichtern.

Dabei erfolgt die Abdichtung zwischen einem mit der Welle verbundenen und mitrotierendem Ring und einem im Gehäuse angeordneten stationären Ring. Je nach konstruktiver Ausbildung kann die Ebene, in der sich beide Ringe berühren, der auch als Dichtspalt bezeichnet wird, parallel zur Wellenachse liegen. In diesem Fall wird solch eine Dichtung als Radialdichtung bezeichnet. In einem anderen Fall kann die Ebene senkrecht zur Wellenachse stehen. In diesem Fall wird die Dichtung als Axial-Gleitringdichtung bezeichnet.

Axial-Gleitringdichtungen bestehen aus einem Gleitring und einem Gegenring. Als Gleitring wird dabei jener Teil bezeichnet, der gegen den Dichtungspartner gedrückt wird und in der Lage ist, die axiale Position zu ändern. Er kann dabei sowohl die rotierende als auch die stationäre Komponente sein und wird in beiden Fällen trotzdem Gleitring genannt. Der Gegenring ist dementsprechend die Komponente, welche die axiale Position nicht ändern kann und den Dichtungspartner des Gleitrings darstellt.

Eine Änderung der axialen Position ist einerseits aufgrund unterschiedlicher Wärmeausdehnungen erforderlich und außerdem wegen maßänderndem Verschleiß der Dichtringe notwendig, um den Dichtspalt auf gleicher Höhe zu halten. Gleitringdichtungen bieten den Vorteil, den Verschleiß ausgleichen zu können. Die Energie zur axialen Bewegung des Gleitrings wird aus einem zuvor verformten, elastischen Element gewonnen. Es kann beispielsweise eine einfache Feder als Energiespeicher für die Axialbewegung benutzt werden. Die daraus resultierende Kraft auf den Gleitring, zuzüglich der Kraft aus dem Betriebsdruck, unter Berücksichtigung des Flächenverhältnisses, bewirkt ein Anpressen des Gleitrings gegen den Gegenring und schließt den Dichtspalt. Dieser Kraft stehen die spaltöffnenden Größen, hydrostatischer und hydrodynamischer Spaltdruck gegenüber. Bei einer stehenden Welle werden die Dichtkörper durch die Vorspannung der elastischen Elemente aneinander gedrückt und der Dichtspalt verschlossen. Im Betrieb hingegen trennen sich im günstigen Fall bei sorgfältiger Auslegung und Fertigung die Dichtflächen vollständig voneinander und es stellt sich ein tragender Dichtspalt aus dem abzudichtenden Medium von unter 1 µm ein. Wegen der komplexen tribologischen Effekte ergeben sich besondere Anforderungen an die Werkstoffe der eigentlichen Gleit- und Gegenringe. Der Umstand, dass Gleitringdichtungen meist in aggressiven Medien eingesetzt werden, erhöht die Anforderungen an die Werkstoffe weiter.

Die Gleitringe sollten eine gute Wärmeleitfähigkeit aufweisen, um die Wärme abführen zu können und außerdem temperaturschockbeständig sein, um nicht infolge starker Temperaturschwankungen beschädigt zu werden.

Es ist üblich die Gleitringe, die in manchen Ausführungsformen auch als Schwimmringe bezeichnet werden, mit einer Weißmetall-Babbitt-Beschichtung zu versehen, um Trockenlaufeigenschaften zu gewährleisten und Schäden an der Welle bei Kollisionen zu vermeiden. Diese Weißmetall-Babbitt-Beschichtung unterliegt der Korrosion, wodurch sie in der Folge beschädigt werden und ihren Zweck nicht mehr erfüllen kann. Besonders bei Kompressoranwendungen mit einem Schwefelwasserstoff-Gehalt (H₂S) kann es auf Grund des Kupferanteils in der Legierung zu einer starken Korrosion kommen. Dies führt unter anderem zu einer höheren Leckage, einem geringeren Wirkungsgrad, einer geringeren Maschinenlaufzeit und einem höheren Ersatzbedarf.

In dem Dokument US 2014/205781 A1 wird ein Verbundmaterial offenbart, gemäß der Präambel von Anspruch 1, das auf ein Substrat aufgebracht werden kann.

In dem Dokument GB 1 388 682 A wird eine Dichtungsanordnung mit einer Beschichtung offenbart.

Die Erfindung hat es sich ausgehend von den bekannten Problemen und Nachteilen des Standes der Technik zur Aufgabe gemacht einen Gleitring anzugeben, mit dem verbesserte Gleitringeigenschaften erzielt werden können.

Des Weiteren ist es Aufgabe der Erfindung, ein Verfahren zur Herstellung eines verbesserten Gleitrings anzugeben.

Die auf die Vorrichtung hin gerichtete Aufgabe wird gelöst durch einen Gleitring mit einer Innenoberfläche, die im Betrieb einer Welle gegenüberliegend angeordnet ist, wobei die Innenoberfläche mit einer Beschichtung ausgebildet ist, wobei die Innenoberfläche eine poröse Struktur aufweist, wobei in der porösen Struktur ein Polymer angeordnet ist, wobei auf die mit dem Polymer ausgebildete poröse Struktur die Beschichtung angeordnet ist, wobei die Beschichtung (3) ein Material aus Polymer umfasst.

Die vom Patentanspruch 1 abhängigen und rückbezogenen Unteransprüche betreffen vorteilhafte Weiterbildungen der Erfindung.

Die auf das Verfahren hin gerichtete Aufgabe wird durch ein Verfahren zur Herstellung eines Gleitringes mit einer Innenoberfläche, die im Betrieb einer Welle gegenüberliegend angeordnet ist, wobei auf der Innenoberfläche eine poröse Struktur aufgebracht wird, wobei in die poröse Struktur geschmolzenes Material aus Polymer eingebracht wird, wobei auf die mit geschmolzenen Polymer ausgebildete poröse Struktur eine Schicht aus Polymer aufgebracht wird.

Die vom Patentanspruch 13 abhängigen und rückbezogenen Unteransprüche betreffen vorteilhafte Weiterbildungen der Erfindung.

Ein wesentliches Merkmal der Erfindung ist es daher, die Weißmetall-Babbittbeschichtung durch eine Polymerbeschichtung zu ersetzen. Hierzu wird ein Polymer verwendet, da diese eine hervorragende Korrosionsbeständigkeit, mechanische Eigenschaften, Verschleißfestigkeit und Eignung für hohe Temperaturen aufweist.

Insbesondere wird der thermoplastische Kunststoff Polyetheretherketon (abgekürzt: PEEK) verwendet, da dieser eine besonders hervorragende Korrosionsbeständigkeit, mechanische Eigenschaften, Verschleißfestigkeit und Eignung für hohe Temperaturen aufweist.

Weitere geeignete Polymere sind Polyaryletherketone (PAEK) zu denen Polyetherketoneketone (PEKK) und das besonders gute geeignete Polyetheretherketone (PEEK) gehören, Polyhalogenolefine zu denen das Polytetrafluorethylen (PTFE) gehört, Polyamidimid (PAI), Polyphenylensulfid (PPS), Ethylene Chlorotrifluoroethylene (ECTFE) sowie Polymid (PI).

Allerdings ist die Wärmeausdehnung der Polymere, insbesondere von Polyetheretherketon (PEEK) im Vergleich zum Substrat, zum Beispiel Stahl sehr unterschiedlich. Dies würde zu einer Delaminierung der Beschichtung führen, da sie beim Abkühlen schrumpft. Um dies zu vermeiden, wird auf der Innenoberfläche des Gleitringes erfindungsgemäß eine poröse Struktur aufgebracht. In diese Struktur, die Hohlräume aufweist, wird das Polymer, insbesondere Polyetheretherketon (PEEK) beim Beschichtungsprozess eingeschmolzen, was zu einer festen formschlüssigen Verbindung von Substrat und Beschichtung führt. Auf die somit erhaltene Oberfläche werden mehrere Schichten einer reinen Beschichtung aus Polymer, insbesondere Polyetheretherketon (PEEK) aufgetragen. Dadurch entsteht ein Gradienten-Materialübergang.

Polyetheretherketon ist ein hochtemperaturbeständiger thermoplastischer Kunststoff und gehört zur Stoffgruppe der Polyeryletherketone. Seine Schmelztemperatur beträgt 335 °C.

Polyetheretherketon (PEEK) ist ein teilkristalliner, thermoplastischer Kunststoff. Es zeigt auch unter thermischer Belastung hervorragende Gleiteigenschaften in Verbindung mit sehr guten mechanischen Eigenschaften.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Gleiche Bauteile oder Bauteile mit gleicher Funktion sind dabei mit gleichen Bezugszeichen gekennzeichnet.

Ausführungsbeispiele der Erfindung werden nachfolgend anhand der Zeichnungen beschrieben. Diese sollen die Ausführungsbeispiele nicht maßstäblich darstellen, vielmehr ist die Zeichnung, wo zur Erläuterung dienlich, in schematisierter und/oder leicht verzerrter Form ausgeführt. Im Hinblick auf Ergänzungen der in der Zeichnung unmittelbar erkennbaren Lehren wird auf den einschlägigen Stand der Technik verwiesen.

Es zeigen:

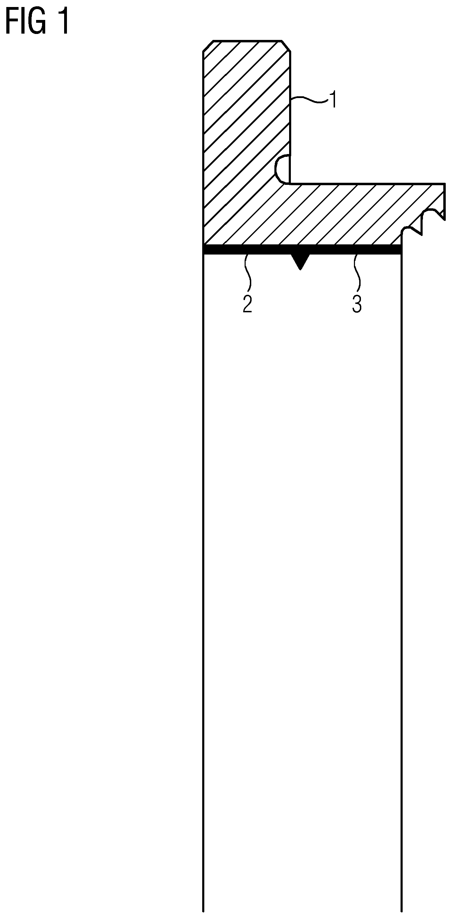

- Figur 1: eine schematische Darstellung eines Gleitringes der Verdichtungsanordnung

Die Figur 1 zeigt eine schematische Darstellung eines erfindungsgemäßen Gleitringes 1. Die Funktionsweise eines Gleitringes 1 in einer Dichtung ist hinreichend bekannt. Daher wird auf die Beschreibung der Funktionsweise eines Gleitringes 1 als Teil einer Dichtung an dieser Stelle verzichtet.

Der Gleitring 1 ist um eine Rotationsachse (nicht dargestellt) kreisförmig ausgebildet. Im Betrieb ist an einer Innenoberfläche 2 des Gleitringes 1 eine Welle angeordnet. Die Welle rotiert im Betrieb mit hohen Drehzahlen. Damit der Schaden bei einer ungewollten Berührung zwischen der Welle und des Gleitringes 1 minimiert ist, wird die Innenoberfläche mit einer Beschichtung 3 ausgebildet.

Diese Beschichtung 3 umfasst ein Polymer. Insbesondere ist die Beschichtung aus Polyetheretherketon ausgebildet. Polyetheretherketon ist ein hochtemperaturbeständiger thermoplastischer Kunststoff und gehört zur Stoffgruppe der Polyeryletherketone. Seine Schmelztemperatur beträgt 335 °C.

Polyetheretherketon (abgekürzt PEEK) ist ein teilkristalliner, thermoplastischer Kunststoff. Es zeigt auch unter thermischer Belastung hervorragende Gleiteigenschaften in Verbindung mit sehr guten mechanischen Eigenschaften.

Weitere geeignete Polymere sind Polyaryletherketone (PAEK) zu denen Polyetherketoneketone (PEKK) und das besonders gute geeignete Polyetheretherketone (PEEK) gehören, Polyhalogenolefine zu denen das Polytetrafluorethylen (PTFE) gehört, Polyamidimid (PAI), Polyphenylensulfid (PPS), Ethylene Chlorotrifluoroethylene (ECTFE) sowie Polymid (PI).

Der Gleitring 1 wird hierbei über seinen gesamten Umfang hinweg an der Innenoberfläche 2 mit der Beschichtung 3 aus Polyetheretherketon ausgebildet.

Der Gleitring 1 kommt besonders dort zum Einsatz, wo hohe Drehzahlen der Welle auftreten, wie zum Beispiel in Turbomaschinen, insbesondere in Verdichtern oder Turbokompressoren.

Die Herstellung des Gleitringes 1 erfolgt wie nachfolgend beschrieben. Auf die Innenoberfläche 2 des Gleitringes 1 wird eine poröse Struktur aufgebracht. Die poröse Struktur umfasst Hohlräume. Die Herstellung dieser porösen Struktur kann durch eine additive Fertigungsmethode erfolgen.

In einem nächsten Schritt wird in die poröse Struktur geschmolzenes Polymer, insbesondere Polyetheretherketon (PEEK) eingebracht. Mit anderen Worten: in die Hohlräume wird geschmolzenes Polymer, insbesondere Polyetheretherketon (PEEK) eingebracht. Dies führt zu einer festen formschlüssigen Verbindung von Substrat und Beschichtung. Dadurch entsteht ein Grundmaterial mit einer Oberfläche mit besonderen Oberflächeneigenschaften.

In einem nächsten Schritt wird auf die Oberfläche eine Schicht aus Polymer, insbesondere Polyetheretherketon (PEEK), insbesondere reinem Polyetheretherketon (PEEK) aufgebracht.

Auf die somit erhaltene Oberfläche werden mehrere Schichten einer reinen Beschichtung aus Polyetheretherketon (PEEK) aufgetragen. Dadurch entsteht ein Gradienten-Materialübergang.

## Patentansprüche

1. Gleitring (1)
mit einer Innenoberfläche (2), die im Betrieb einer Welle gegenüberliegend angeordnet ist,
wobei die Innenoberfläche (2) mit einer Beschichtung (3) ausgebildet ist, wobei die Innenoberfläche (2) eine poröse Struktur aufweist,
wobei die Struktur Hohlräume aufweist,
wobei in die Hohlräume der porösen Struktur ein Polymer formschlüssig angeordnet ist,
wobei auf die mit dem Polymer ausgebildete poröse Struktur die Beschichtung (3) angeordnet ist,
**dadurch gekennzeichnet, dass**
die Beschichtung (3) ein Material aus Polymer umfasst.

2. Gleitring (1) nach Anspruch 1,
**dadurch gekennzeichnet, dass**
die Beschichtung (3) Polyaryletherketone (PAEK) umfasst.

3. Gleitring (1) nach Anspruch 1 oder 2,
**dadurch gekennzeichnet, dass**
die Beschichtung (3) Polyetheretherketone (PEEK) umfasst.

4. Gleitring (1) nach einem der vorhergehenden Ansprüche, **dadurch gekennzeichnet, dass**
die Beschichtung (3) Polyetherketoneketone (PEKK) umfasst.

5. Gleitring (1) nach einem der vorhergehenden Ansprüche, **dadurch gekennzeichnet, dass**
die Beschichtung (3) Polyhalogenolefine umfasst.

6. Gleitring (1) nach Anspruch 5,
**dadurch gekennzeichnet, dass**
die Beschichtung (3) Polytetrafluorethylen (PTFE) umfasst.

7. Gleitring (1) nach einem der vorhergehenden Ansprüche, **dadurch gekennzeichnet, dass**
die Beschichtung (3) Polyamidimid (PAI) umfasst.

8. Gleitring (1) nach einem der vorhergehenden Ansprüche, **dadurch gekennzeichnet, dass**
die Beschichtung (3) Polyphenylensulfid (PPS) umfasst.

9. Gleitring (1) nach einem der vorhergehenden Ansprüche, **dadurch gekennzeichnet, dass**
die Beschichtung (3) Ethylene Chlorotrifluoroethylene (ECTFE) umfasst.

10. Gleitring (1) nach einem der vorhergehenden Ansprüche, **dadurch gekennzeichnet, dass**
die Beschichtung (3) Polyimid (PI) umfasst.

11. Gleitring (1) nach Anspruch 1,
wobei die Innenoberfläche (2) einen Umfang bildend kreisförmig ausgebildet ist und das Polymer vollständig auf dem Umfang angeordnet ist.

12. Gleitring (1) nach Anspruch 1 oder 2,
wobei der Gleitring (1) zum Einsatz in einer Turbomaschine, insbesondere einem Verdichter oder Turbokompressor ausgebildet ist.

13. Verfahren zur Herstellung einer Gleitringes (1) mit einer Innenoberfläche (2), die im Betrieb einer Welle gegenüberliegend angeordnet ist,
wobei auf der Innenoberfläche (2) eine poröse Struktur aufgebracht wird,
wobei in die poröse Struktur geschmolzenes Polymer eingebracht wird,
wobei auf die mit geschmolzenen Polymer ausgebildete poröse Struktur eine Schicht aus Polymer aufgebracht wird, **dadurch gekennzeichnet, dass**
die poröse Struktur durch ein additives Fertigungsverfahren erfolgt.

14. Verfahren zur Herstellung einer Gleitringes (1) mit einer Innenoberfläche (2), die im Betrieb einer Welle gegenüberliegend angeordnet ist,
wobei auf der Innenoberfläche (2) eine poröse Struktur aufgebracht wird,
wobei in die poröse Struktur geschmolzenes Polyetheretherketon eingebracht wird,
wobei auf die mit geschmolzenen Polyetheretherketon ausgebildete poröse Struktur eine Schicht aus Polyetheretherketon aufgebracht wird.

15. Verfahren zur Herstellung nach Anspruch 13, wobei auf die Schicht aus Polymer eine weitere Schicht aus Polymer aufgebracht wird.

16. Verfahren zur Herstellung nach Anspruch 14, wobei auf die Schicht aus Polyetheretherketon eine weitere Schicht aus Polyetheretherketon aufgebracht wird.

## Claims

1. A slide ring (1)
having an inner surface (2) arranged opposite a shaft in operation,
the inner surface (2) being formed with a coating (3), the inner surface (2) having a porous structure,
the structure having cavities,
a polymer being positively arranged within the cavities of the porous structure,
the coating (3) being arranged upon the porous structure formed with the polymer,
**characterised in that**
the coating (3) comprises a polymer material.

2. The slide ring (1) in accordance with claim 1, **characterised in that**
the coating (3) comprises polyaryletherketones (PAEK).

3. The slide ring (1) in accordance with claim 1 or 2, **characterised in that**
the coating (3) comprises polyetheretherketones (PEEK).

4. The slide ring (1) in accordance with any of the preceding claims,
**characterised in that**
the coating (3) comprises polyetherketoneketones (PEKK).

5. The slide ring (1) in accordance with any of the preceding claims,
**characterised in that**
the coating (3) comprises polyhalogen olefines.

6. The slide ring (1) in accordance with claim 5, **characterised in that**
the coating (3) comprises polytetrafluoroethylene (PTFE).

7. The slide ring (1) in accordance with any of the preceding claims,
**characterised in that**
the coating (3) comprises polyamide-imide (PAI).

8. The slide ring (1) in accordance with any of the preceding claims,
**characterised in that**
the coating (3) comprises polyphenylene sulphide (PPS).

9. The side ring (1) in accordance with any of the preceding claims,
**characterised in that**
the coating (3) comprises ethylene chlorotrifluoroethylene (ECTFE) .

10. The slide ring (1) in accordance with any of the preceding claims,
**characterised in that**
the coating (3) comprises polyimide (PI).

11. The slide ring (1) in accordance with claim 1,
wherein the inner surface (2) is formed circularly, shaping a circumference, and the polymer is entirely arranged upon the circumference.

12. The slide ring (1) in accordance with claim 1 or 2,
wherein the slide ring (1) is formed for utilisation in a turbomachine, specifically a compressor or turbo-compressor.

13. A method for producing a slide ring (1) with an inner surface (2) arranged opposite a shaft in operation,
wherein a porous structure is applied onto the inner surface (2),
wherein smelted polymer is inserted into the porous structure, wherein a polymer layer is applied onto the porous structure formed with smelted polymer,
**characterised in that**
the porous structure emerges by an additive manufacturing method.

14. A method for producing a slide ring (1) with an inner surface (2) arranged opposite a shaft in operation,
wherein a porous structure is applied onto the inner surface (2),
wherein smelted polyetheretherketone is inserted into the porous structure,
wherein a polyetheretherketone layer is applied onto the porous structure formed with smelted polyetheretherketone.

15. The method for producing in accordance with claim 13, wherein a further polymer layer is applied onto the polymer layer.

16. The method for producing in accordance with claim 14, wherein a further polyetheretherketone layer is applied onto the polyetheretherketone layer.

## Revendications

1. Bague de glissement (1)
comprenant une surface intérieure (2) qui est en cours de fonctionnement disposée à l'opposé d'un arbre,
dans laquelle la surface intérieure (2) est réalisée avec un revêtement (3), la surface intérieure (2) présentant une structure poreuse,
dans laquelle la structure présente des cavités,
dans laquelle un polymère est disposé par complémentarité de forme dans les cavités de la structure poreuse,
dans laquelle le revêtement (3) est disposé sur la structure poreuse réalisée en polymère,
**caractérisée en ce que**
le revêtement (3) comprend une matière polymère.

2. Bague de glissement (1) selon la revendication 1, **caractérisée en ce que**
le revêtement (3) comprend du polyaryléthercétone (PAEK).

3. Bague de glissement (1) selon la revendication 1 ou 2, **caractérisée en ce que**
le revêtement (3) comprend du polyétheréthercétone (PEEK).

4. Bague de glissement (1) selon l'une quelconque des revendications précédentes,
**caractérisée en ce que**
le revêtement (3) comprend du polyéthercétonecétone (PEKK).

5. Bague de glissement (1) selon l'une quelconque des revendications précédentes,
**caractérisée en ce que**
le revêtement (3) comprend du polyhalogénoléfine.

6. Bague de glissement (1) selon la revendication 5,
**caractérisée en ce**
**que** le revêtement (3) comprend du polytétrafluoréthylène (PTFE).

7. Bague de glissement (1) selon l'une quelconque des revendications précédentes,
**caractérisée en ce que**
le revêtement (3) comprend du polyamidimide (PAI).

8. Bague de glissement (1) selon l'une quelconque des revendications précédentes,
**caractérisée en ce que**
le revêtement (3) comprend du polysulfure de phénylène (PPS).

9. Bague de glissement (1) selon l'une quelconque des revendications précédentes,
**caractérisée en ce que**
le revêtement (3) comprend de l'éthylène chlorotrifluoroéthylene (ECTFE).

10. Bague de glissement (1) selon l'une quelconque des revendications précédentes,
**caractérisée en ce que**
le revêtement (3) comprend du polyimide (PI).

11. Bague de glissement (1) selon la revendication 1,
dans laquelle la surface intérieure (2) est réalisée de manière circulaire en formant une circonférence, et le polymère est disposé entièrement sur la circonférence.

12. Bague de glissement (1) selon la revendication 1 ou 2, dans laquelle la bague de glissement (1) est réalisée pour être mise en œuvre dans une turbomachine, en particulier un compresseur ou turbocompresseur.

13. Procédé de fabrication d'une bague de glissement (1) pourvue d'une surface intérieure (2) qui est en cours de fonctionnement disposée à l'opposé d'un arbre,
dans lequel une structure poreuse est appliquée sur la surface intérieure (2),
dans lequel un polymère fondu est introduit dans la structure poreuse,
dans lequel une couche de polymère est appliquée sur la structure poreuse réalisée en polymère fondu,
**caractérisé en ce que**
la structure poreuse est formée par un procédé de fabrication additif.

14. Procédé de fabrication d'une bague de glissement (1) pourvue d'une surface intérieure (2) qui est en cours de fonctionnement disposée à l'opposé d'un arbre,
dans lequel une structure poreuse est appliquée sur la surface intérieure (2),
dans lequel du polyétheréthercétone fondu est introduit dans la structure poreuse,
dans lequel une couche de polyétheréthercétone est appliquée sur la structure poreuse réalisée en polyétheréthercétone fondu.

15. Procédé de fabrication selon la revendication 13,
dans lequel une couche de polymère supplémentaire est appliquée sur la couche de polymère.

16. Procédé de fabrication selon la revendication 14,
dans lequel une couche de polyétheréthercétone supplémentaire est appliquée sur la couche de polyétheréthercétone.
